Europäisches Patentamt

(19) European Patent Office

Office européen des brevets

(11) Numéro de publication : **0 016 892**
**B1**

# (12) FASCICULE DE BREVET EUROPÉEN

(45) Date de publication du fascicule du brevet :
**22.09.82**

(21) Numéro de dépôt : **79430008.7**

(22) Date de dépôt : **06.04.79**

(51) Int. Cl.³ : **A 01 C 11/02**, B 65 G 47/00

(54) **Dispositif pour planter des plants en mottes ou en godets.**

(43) Date de publication de la demande :
**15.10.80 (Bulletin 80/21)**

(45) Mention de la délivrance du brevet :
**22.09.82 Bulletin 82/38**

(84) Etats contractants désignés :
**BE CH DE FR GB IT LU NL SE**

(56) Documents cités :
**DE A 2 638 846**
**DK C 45 369**
**FR A 2 318 567**
**US A 2 503 828**
**US A 3 103 186**
**US A 3 176 635**
**US A 3 306 239**
**US A 3 815 524**

(73) Titulaire : **Budzyn, René**
**30580 - Seynes (FR)**

(72) Inventeur : **Budzyn, René**
**30580 - Seynes (FR)**

(74) Mandataire : **Moretti, René et al**
**C/O Cabinet BEAU DE LOMENIE 14, rue Raphael**
**F-13008 Marseille (FR)**

Imprimerie Jouve, 18, rue St-Denis, 75001 Paris, France

## Dispositif pour planter des plants en mottes ou en godets

La présente invention a pour objet un dispositif pour planter des plants en mottes ou en godets.

On connaît actuellement des machines pour planter des plants en mottes ou en godets comportant des roues distributrices armées de pinces pour prendre les mottes ou les godets provenant d'appareils d'alimentation en continu et pour les mettre en terre.

On connaît également des machines automatiques à planter des plants en mottes et dont le dispositif d'approvisionnement est composé d'un cadre-guide de séparation et de guidage des rangées de mottes, lesquelles sont poussées vers des pinces de préhension qui mettent les mottes dans un sillon.

On connaît encore des machines pour planter des plants en mottes ou en godets comportant une roue distributrice à palettes articulées disposée à l'extrémité inférieure d'un plan incliné d'approvisionnement en mottes, lesquelles sont laissées dans un sillon par ladite route à palettes escamotables, selon un pas régulier.

On connaît également une machine pour planter des plants comprenant des bras distributeurs comportant des moyens pour déposer des plants dans un sillon pratiqué dans le sol et pour faire des ouvertures dans un film de matière plastique déroulé par la machine de manière à planter les mottes dans le sol et à pailler les plants simultanément. Une autre machine connue est décrite dans le brevet US 3 815 524. Cette machine comporte des godets portés à l'extrémité de bras de telle sorte à être maintenus dans une position verticale par rapport au sol, les moyens mis en œuvre pour maintenir les godets dans cette position sont complexes et les mottes sont mises manuellement dans les godets avant que ceux-ci les déposent dans le sol.

Le brevet US 2 503 828 décrit une autre machine automatique pour planter des graines comportant des plantoirs fixés à une chaîne mécanique et destinés à former des trous dans le sol et un distributeur à roue à broches pour distribuer et laisser tomber les graines dans les trous formés par les plantoirs.

Le dispositif selon l'invention est un perfectionnement des machines citées ci-avant et consiste plus particulièrement en une machine permettant de réaliser automatiquement la mise en terre des plants en mottes ou en godets du fait des moyens mis en œuvre, tant au niveau de l'approvisionnement en mottes que du dispositif de distribution de celles-ci, lesquelles mottes sont déposées dans des trous de plantation obtenus au moyen d'organes simples portés par la machine.

Un objectif de la présente invention est la mise en terre mécanique et automatique des plants en mottes ou en godets et ainsi une machine automotrice ou tractée permettant d'obtenir ces résultats.

Un autre objectif de l'invention est de permettre de procéder simultanément à la pose de la bande plastique pour le paillage et sa perforation et à la mise en terre des mottes.

Ces objectifs sont atteints par le dispositif selon l'invention pour planter des plants en mottes ou en godets, lequel se compose d'un châssis porté par au moins deux roues et comportant au moins une unité de plantation comprenant une roue distributrice-perforatrice-imprimante comportant des moyens distributeurs de mottes et des plantoirs régulièrement répartis à sa périphérie, laquelle roue est montée à rotation sur le châssis pour se présenter dans une position sensiblement perpendiculaire au sol de manière à imprimer dans celui-ci des trous suivant un pas régulier pour y disposer les mottes ou les godets, caractérisé en ce qu'il se compose :

— d'un couloir incliné vers le bas et de l'avant vers l'arrière du châssis pour acheminer les mottes de sa partie supérieure jusqu'à proximité du sol, lequel couloir est disposé sur un des côtés de ladite roue distributrice-perforatrice-imprimante et comporte des moyens pour déplacer, dans le sens transversal, les mottes parvenues à son extrémité arrière inférieure, de cette extrémité vers la roue distributrice-perforatrice-imprimante, lesquels moyens fonctionnent en synchronisme avec cette dernière pour que chaque motte soit poussée vers ladite roue lors de chaque passage desdits moyens distributeurs de mottes et des plantoirs ;

— de moyens pour alimenter ledit couloir ;

— et en ce que la roue distributrice-perforatrice-imprimante comporte des tubes distributeurs radiaux fixés sur la face de la roue située du côté du couloir incliné, les tubes distributeurs radiaux étant disposés coaxialement au-dessus desdits plantoirs, laquelle roue comporte en outre, à l'extrémité des tubes situés du côté du centre de la roue et près de la paroi arrière desdits tubes, des languettes-poussoirs pour entraîner les mottes provenant du couloir et les faire tomber par gravité à travers les tubes correspondants pour les déposer dans les trous imprimés par la roue au moyen des plantoirs.

Un dispositif selon l'invention, lequel comporte devant la roue distributrice-perforatrice-imprimante et au-dessous du châssis, un tambour transversal autour duquel est enroulée une bande de matière plastique dont les bords latéraux sont appliqués sur le sol au moyen de deux roues disposées de part et d'autre de l'axe longitudinal du châssis, lesquels bords sont enterrés au moyen de corps de charrue fixés au châssis de manière à longer les bords latéraux de la bande, laquelle se déroule sous l'effet du déplacement du dispositif, se caractérise par le fait que la bande est perforée par des lames fixes et mobiles composant les plantoirs, simultanément à la formation des trous, en vue d'obtenir en une seule opération, la mise en terre et le paillage des plans.

Selon un mode de réalisation, les moyens pour faire les trous de plantation dans le sol sont portés par la roue distributrice-perforatrice-imprimante et consistent en des lames fixes et articulées deux à deux prolongeant les tubes distributeurs disposés à la périphérie de ladite roue, à l'extérieur de celle-ci, sur une distance égale à la profondeur des trous à obtenir, lesquelles lames fixes et articulées délimitent le contour des trous de plantation.

Chaque lame mobile comporte un levier qui coopère avec un coulisseau commun aux deux lames mobiles, lequel est commandé par un bras articulé à la roue distributrice-perforatrice-imprimante, s'étendant du côté de celle-ci et comportant à son extrémité libre un galet pour rouler sur une came portée par le châssis. Chaque tube distributeur comporte du côté de son ouverture de sortie et avant les lames fixes et mobiles, un patin débordant de part et d'autre du tube et dont la face qui vient au contact du sol est d'une courbure concentrique à la roue distributrice.

Le résultat de l'invention est ainsi un dispositif pour la mise en terre automatique des plants en mottes ou en godets, un tel dispositif pouvant être équipé d'un appareil dérouleur de bande de matière plastique souple, pour réaliser simultanément le paillage et la plantation des plants en mottes ou en godets.

Un tel dispositif peut être soit attelé à un tracteur agricole par l'intermédiaire de son attelage à trois points, ou encore être automoteur.

Dans l'un ou l'autre des cas, le dispositif ne nécessite qu'un personnel réduit à un exécutant.

Le dispositif selon l'invention est particulièrement adapté pour la plantation des grandes exploitations agricoles.

Les patins de la roue distributrice-perforatrice-imprimante sont au contact du sol et exercent une pression à la périphérie des mottes. Celles-ci sont ainsi bloquées dans la terre automatiquement au fur et à mesure de la mise en terre des plants. Ces patins ont également pour fonction de limiter la pénétration des lames fixes et mobiles à partir desquelles la formation des trous de plantation est obtenue.

D'autres avantages ressortiront encore à la lecture de la description suivante uniquement donnée à titre d'exemple non limitatif en référence au dessin annexé sur lequel :

La figure 1 est une vue en perspective d'un dispositif selon l'invention dans sa réalisation pour être attelé derrière un tracteur agricole ;

la figure 2 est une vue en perspective partielle de l'extrémité inférieure d'une unité de plantation ;

la figure 3 est une vue en perspective partielle d'une unité de plantation illustrant l'extrémité inférieure d'un couloir incliné et d'un tube distributeur équipant la roue distributrice ;

les figures 4 à 7 sont des vues en perspective partielle d'une roue distributrice illustrant le cheminement d'un tube distributeur tracé en traits gras, avant, pendant et après son passage sous la plateforme qui porte les mottes ;

la figure 8 est une vue en perspective d'un tube distributeur-perforateur équipant les roues distributrices-perforatrices-imprimantes ;

la figure 9 est une vue de face du dispositif de commande d'ouverture et de fermeture des lames mobiles équipant les tubes distributeurs-perforateurs ;

la figure 10 est une vue en coupe partielle de la partie inférieure d'un tube distributeur-perforateur au moment où il imprime la terre, les lames pivotantes étant en position « fermées » ;

la figure 11 est une vue en coupe partielle de la partie inférieure d'un tube distributeur-perforateur tel qu'illustré à la figure 10 mais dont les lames pivotantes sont en position « ouverte » après la formation d'un trou de plantation ;

la figure 12 est une vue en perspective de l'appareil d'alimentation des couloirs inclinés illustrant la première phase de fonctionnement : les couteaux étant escamotés et juxtaposés à proximité de la table-support de mottes ;

la figure 13 est une vue en perspective de l'appareil de la figure 12 illustrant la deuxième phase de fonctionnement : les couteaux étant déployés pour réaliser la séparation de trois rangées de mottes ;

la figure 14 est une vue en perspective de l'appareil de la figure 12 illustrant la troisième phase de fonctionnement : les couteaux ayant été déplacés transversalement et mis dans le prolongement des couloirs inclinés ;

la figure 15 est une vue en perspective de l'appareil de la figure 12 illustrant la quatrième phase de fonctionnement : les poussoirs de mottes ayant été déplacés du côté des couloirs inclinés.

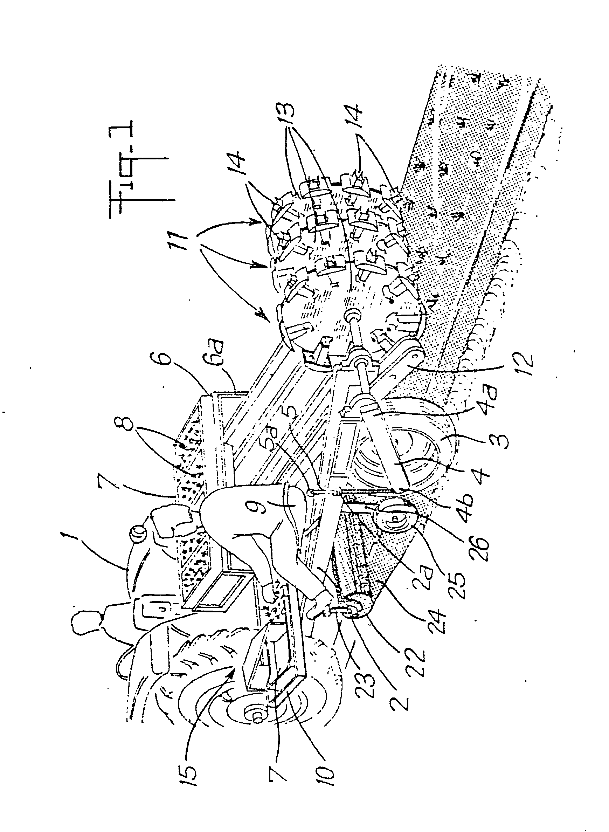

On se reporte d'abord à la figure 1 du dessin qui illustre un mode de réalisation d'un dispositif selon l'invention, lequel est tracté par un tracteur 1 et se compose d'un châssis 2 réalisé à partir de fers profilés assemblés entre eux pour former une structure généralement rectangulaire. Ce châssis 2 est porté par deux roues 3, disposées à sa partie arrière et de part et d'autre du châssis, lesquelles roues sont montées à rotation sur deux arbres en porte-à-faux fixés sur deux bras 4 articulés par une de leurs extrémités 4a au châssis 2. Leur extrémité 4b est reliée à une tige filetée 5, laquelle coopère avec deux oreilles taraudées 2a, fixées au châssis. L'extrémité supérieure des tiges filetées 5 comporte un organe de préhension 5a pour entraîner la tige en rotation dans un sens ou dans l'autre et ainsi faire pivoter les bras 4 pour faire varier la distance du châssis au sol.

Le châssis 2 comporte à sa partie avant un support 6 d'une forme rectangulaire, lequel est relié au châssis par des montants 6a de faible hauteur. Ce support a pour fonction de porter les plateaux 7 dans lesquels sont rangés les plants en mottes 8.

Tel que l'illustre le dessin, le dispositif comporte également un siège 9, fixé sur le côté gauche du châssis et sur lequel prend place l'opérateur. Devant celui-ci et derrière le support 6, une structure 10 d'une forme rectangulaire allongée est fixée sur le châssis 2, laquelle structure s'étend transversalement au châssis parallèlement au support 6 et se prolonge en porte-à-faux devant le siège 9 de l'opérateur.

Le châssis porte une ou plusieurs unités de plantations 11.

L'exemple représenté en référence à la figure 1 illustre un appareil comportant trois unités.

Ces unités 11 sont dans des plans sensiblement verticaux, parallèles entre eux et ainsi sensiblement perpendiculaires au sol.

Lesdites unités s'étendent dans le sens longitudinal du châssis 2 de ladite structure 10 jusqu'à la partie extrême arrière du châssis et sont situées dans sa partie centrale.

Chacune d'elle se compose essentiellement d'un couloir distributeur 12, et d'une roue distributrice-perforatrice-imprimante 13.

Les couloirs 12 reçoivent les mottes 8 distribuées par un dispositif d'alimentation 15, porté par la structure 10 et acheminent lesdites mottes du côté du sol, à l'arrière de la machine et à proximité des roues distributrices-perforatrices-imprimantes 13, lesquelles déposent les mottes 8 dans les trous qu'elles impriment préalablement dans le sol.

Lesdits couloirs 12 sont inclinés de la partie supérieure du châssis jusqu'à une faible distance du sol et s'étendent de l'avant vers l'arrière du châssis 2. Ils sont prolongés à leur partie supérieure par la structure 10 qui porte les moyens d'alimentation 15, lesquels sont ainsi dans une position inclinée.

On se reporte maintenant aux figures 12 à 15 du dessin qui illustrent différentes phases de fonctionnement du dispositif d'alimentation 15 du couloir 12.

La structure 10 comporte une plaque-support 10a de faible épaisseur, les plateaux de mottes 7 sont mis en appui sur un rebord 10b formant butée et disposé à une extrémité de la plaque 10a. Les plateaux utilisés ne comportent que trois parois latérales reliées à un fond, pour permettre de faire passer du côté des couloirs 12 l'ensemble des mottes 8.

Le transfert des mottes du côté des couloirs 12 est obtenu au moyen d'un volet-poussoir 15a porté par un support 15b, lequel est articulé à un coulisseau 15c monté à glissement sur une glissière s'étendant le long du côté le plus élevé de la structure 10. Ce coulisseau est entraîné en translation par un vérin pneumatique à double effet, non représenté sur le dessin.

Le volet 15a est ainsi à la fois perpendiculaire à la plaque-support 10a et s'étend perpendiculairement aux longerons 10c de la structure 10. Le coulisseau 15c est parallèle audit volet 15a.

Le support 15b est articulé en 15d pour obtenir l'effacement du volet 15 en le faisant pivoter vers l'avant du châssis et permettre la mise en place d'un plateau sur la structure 10. Le volet est ensuite rabattu dans le plateau et est mis au contact de la rangée de mottes la plus proche de l'extrémité 10d de la structure 10.

Du côté de la butée 10b, le dispositif comporte trois plaques supports mobiles 15e juxtaposées les unes aux autres et situées dans le plan de la plaque-support de mottes 10a.

Les plaques-supports 15e adoptent la forme de bandes d'une largeur sensiblement égale à celle d'une motte, et s'étendent transversalement à la structure 10, donc parallèlement aux couloirs 12. Le support 15e le plus éloigné de la plaque-support 10a comporte une paroi 15f sur laquelle les mottes 8 viennent en appui.

A chacune de ces plaques-supports 15e, est associé un couteau escamotable 15g. Ces couteaux sont animés ensemble d'un mouvement alternatif pour se déplacer parallèlement aux couloirs 12 et aux supports 15e.

Leur course est égale à la largeur de la plaque-support 10a. Ces couteaux sont disposés au droit du côté des supports 15e le plus rapproché de la plaque-support 10a et sont ainsi parallèles entre eux et à ladite paroi 15f. Ils ont pour fonction de dissocier les rangées de mottes portées par chaque support 15e.

Lesdits couteaux 15g sont reliés à une de leurs extrémités à une monture télescopique 15h fixée à la tige mobile d'un vérin pneumatique à double effet (non représenté sur le dessin), lequel vérin anime lesdits couteaux en translation, parallèlement aux couloirs 12.

La figure 12 illustre les couteaux 15g dans leur position rétractée vers l'avant du châssis 2, la figure 13 montre les couteaux dans leur position déployée et regroupés du côté de la plaque-support 10a.

La monture télescopique 15h est reliée par son extrémité $15h_1$ à un vérin pneumatique à double effet (non représenté sur le dessin) qui la déploie du côté des couloirs 12 ou la rétracte du côté de la plaque-support 10a en entraînant les couteaux 15g et également les plaques-supports 15e qui portent les mottes.

Comme l'illustre la figure 14, en position déployée, les supports 15e se présentent dans le prolongement des couloirs 12.

De côté et au-dessus de la monture télescopique 15h, le dispositif comporte une armature mobile 15j, destinée à se déplacer de l'avant vers l'arrière du châssis et réciproquement tout en étant perpendiculaire aux couteaux 15g. Cette armature est animée au moyen d'un vérin pneumatique à double effet (non représenté sur le dessin) et s'étendant dans la direction des couloirs 12 et comporte des poussoirs 15k, se déplaçant dans l'axe desdits couloirs.

Ces poussoirs 15k sont articulés pour être relevés au-dessus des couteaux 15g et permettre ainsi leur déplacement transversal lorsque l'armature 15j est du côté de la monture 15h et pour pivoter vers le bas du côté des supports 15e pour venir au contact des rangées de mottes portées par lesdits supports 15e et les pousser du côté des couloirs 12, en vue de leur prise en charge par lesdits couloirs.

Des moyens sont montés sur les ensembles couteaux 15g/supports 15e pour maintenir les rangées de mottes pendant le déplacement desdits ensembles.

On se reporte maintenant aux figures 1 à 3 du dessin.

Les couloirs 12 sont d'une section en U et comportent ainsi deux parois latérales 12a et un fond 12b. Leur fond 12b est constitué par le brin porteur d'une bande transporteuse qui s'enroule autour de deux rouleaux montés à rotation libre dans une chape 12c fixée aux couloirs.

L'entraînement de la bande est obtenu au moyen d'une roue à friction qui coopère avec l'autre brin de la bande qui passe au-dessous des couloirs (non représenté sur le dessin).

Lesdits couloirs 12 sont coudés à angle droit à leur extrémité inférieure et comportent ainsi une partie 12 d de plus petite longueur qui s'étend sur le côté transversalement au châssis 2. Cette partie de couloir 12d est ouverte à son extrémité libre 12e et porte une plateforme 12f s'étendant vers l'extérieur et du côté de ladite roue distributrice-perforatrice-imprimante 13.

Ladite plateforme 12f prolonge le fond de la partie de couloir 12d et comporte un bord relevé 12g qui lui est perpendiculaire, lequel bord relevé se prolonge vers l'arrière du châssis 2 pour former une glissière latérale 12h, laquelle est d'un profil courbe. Les bords latéraux de la glissière 12h sont des arcs de cercle dont le centre est commun à celui de la roue distributrice-perforatrice-imprimante 13.

La paroi 12a faisant face à la partie de couloir 12d est interrompue en 12j pour former une ouverture en face de la partie 12d afin de laisser le passage à un organe-poussoir 16. Celui-ci est fixé à une plaque 16a s'étendant vers le bas, laquelle est reliée à un vérin pneumatique à double effet 17, solidaire du couloir 12.

L'organe-poussoir 16 est d'une section carrée légèrement inférieure à celle de la partie de couloir 12d et comporte sur le côté, situé vers l'avant de la machine, une lame 16b comportant une arête vive 16c, ainsi qu'une face plane 16d perpendiculaire à ladite lame. Les mottes 8 amenées par la bande transporteuse 12b devant la partie de couloir 12d en formant des rangées de mottes liées entre elles, sont dissociées par la lame 16b et ensuite poussées par la face plane 16d sous l'effet du poussoir 16 pour être mises en attente sur la plateforme 12f, pour être ensuite reprises par la roue distributrice-perforatrice-imprimante 13.

Celle-ci se compose d'un disque métallique 13a, calé sur un arbre 18, monté à rotation dans des paliers fixés au châssis 2 et sa partie extrême arrière. Ladite roue 13 se compose en outre de plusieurs tubes distributeurs radiaux 13b fixés sur la face du disque 13a, située en regard du couloir 12, laquelle face se trouve ainsi à proximité de la plateforme 12f. Les tubes 13b sont d'une section carrée, sont également répartis à la périphérie du disque 13a et s'étendent à l'extérieur de celle-ci. Ils sont disposés sur ladite roue 13 pour passer, au cours de la rotation de cette dernière, immédiatement au-dessous de la plateforme 12f. Ils comportent à leur partie supérieure une palette 13c, laquelle est portée par un axe 13d s'étendant perpendiculairement au disque 13a et monté le long d'un des bords de son ouverture dirigée du côté de l'arbre 18 et le long du bord de la paroi « avant » 13e du tube, en fonction du sens de rotation R de la roue 13.

L'axe 13d est coudé et se prolonge vers le bas en formant un levier 13f qui se déplace dans un plan parallèle au disque 13a. La palette 13c est solidaire de l'axe 13d, de telle sorte qu'elle pivote lorsque l'on manœuvre le levier 13f.

Le tube 13b se prolonge à sa partie supérieure par une tôle découpée 13g et pliée pour former un paroi 13h perpendiculaire au disque 13a, située dans le prolongement de la paroi 13j du tube et qui est parallèle à celle à l'extrémité de laquelle pivote la palette 13c. Ladite paroi 13h comporte une échancrure de forme rectangulaire allongée dans laquelle passe le guide courbe 12h délimitant ainsi une languette-poussoir 13k. La palette 13c est, dans sa position normale, sensiblement parallèle à la languette 13k. Elle est maintenue dans cette position au moyen d'un ressort 19 enroulé autour de l'axe 13d.

Le pivotement de la palette 13c est provoqué par deux butées 20/21 qui sont fixées sur le châssis 2 et de part et d'autre de la plateforme 12f.

Ces butées 20/21 sont des tiges cylindriques et s'étendent parallèlement à l'arbre 18, du côté de la roue 13.

La préhension des mottes 8 mises en attente sur la plateforme 12f est obtenue par la coopération de la languette-poussoir 13k et de la palette 13c fonctionnant à la fois sous l'effet du ressort 19 et par l'intermédiaire du levier 13f qui vient en appui sur lesdites butées 20/21 au cours de la rotation de la roue 13.

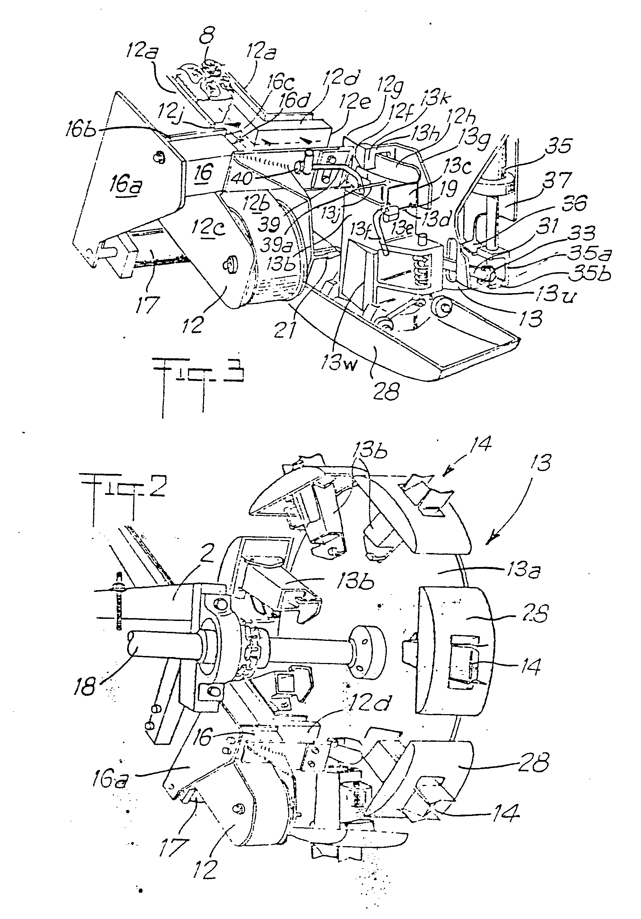

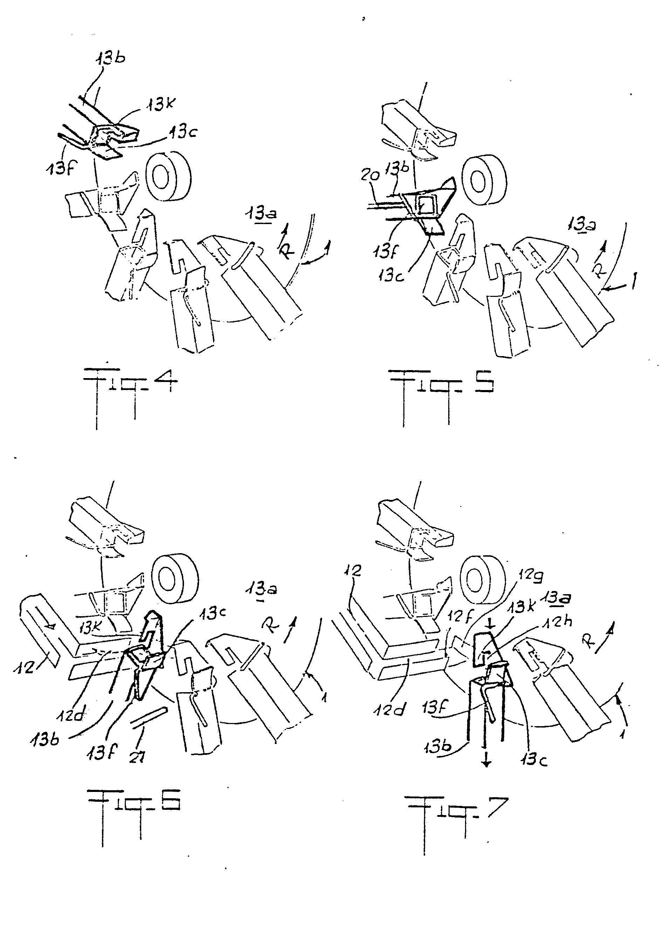

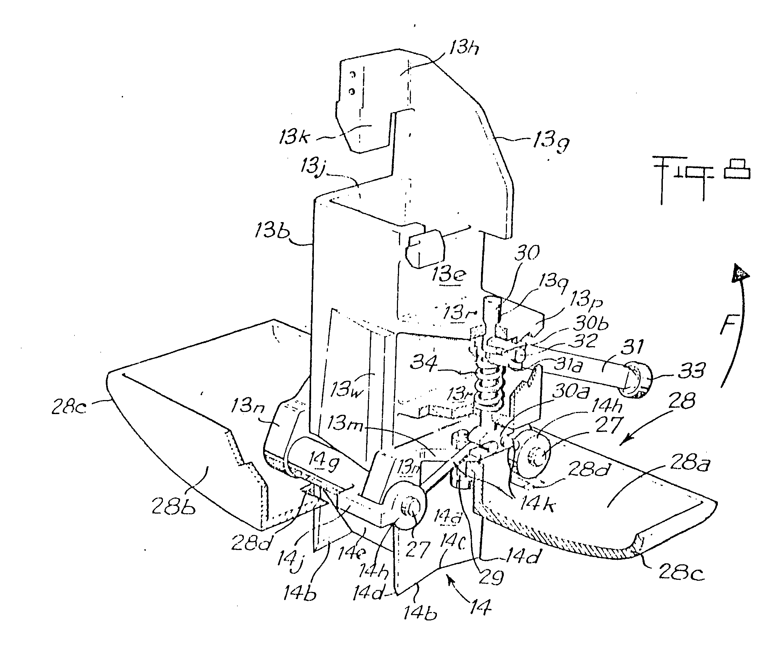

Les figures 4 à 7 du dessin illustrent le fonctionnement du dispositif de préhension des mottes. Le tube distributeur 13b, faisant l'objet de la description, est représenté en traits gras. A la figure 4, la palette 13c est, sous l'effet du ressort 19, dans sa position initiale, sensiblement parallèle à la languette-poussoir 13k et légèrement inclinée vers celle-ci.

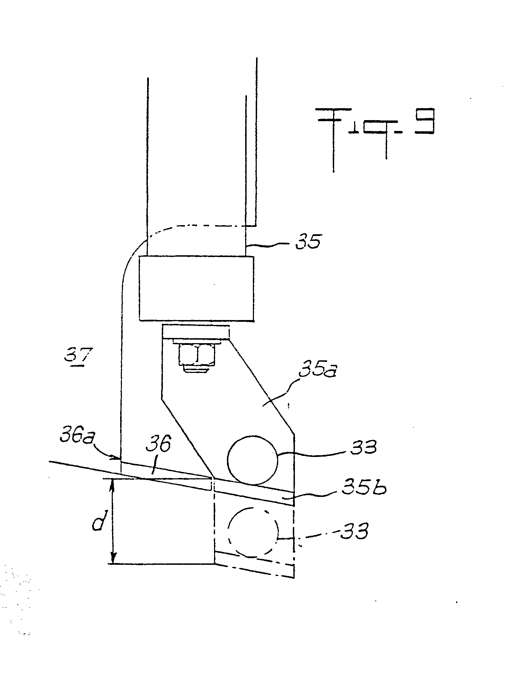

La figure 5 illustre le tube 13b au moment où le levier 13f de la palette 13c rencontre la première butée 20 située en avant de la plateforme 12f.

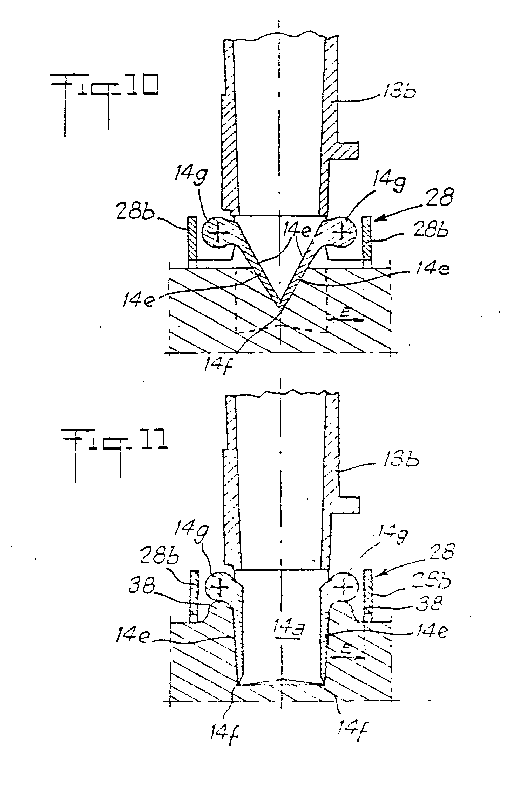

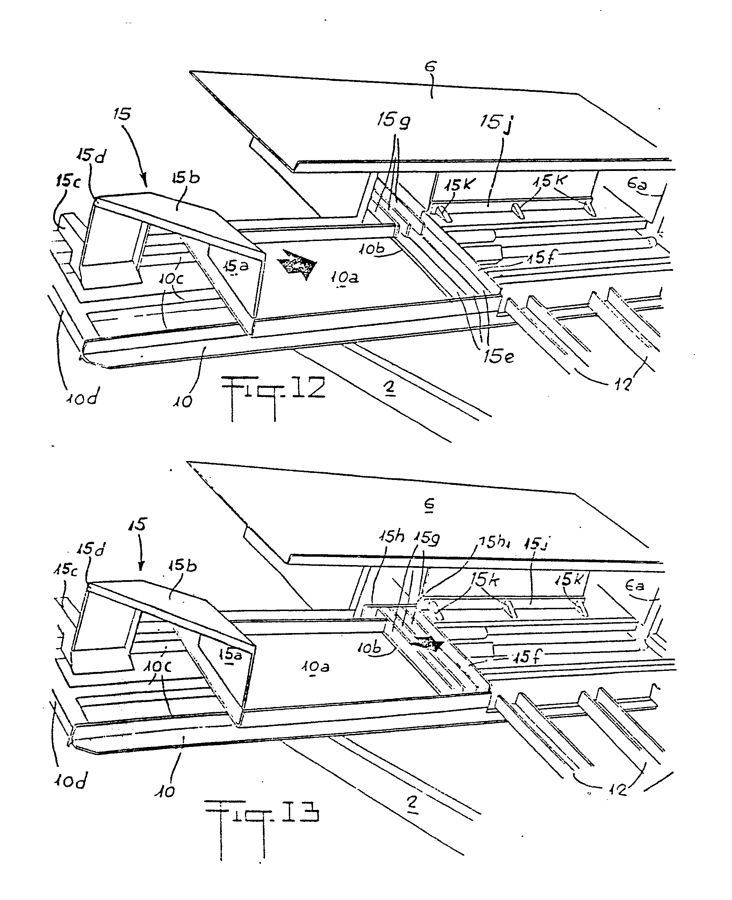

La palette 13c (figures 6 et 7) s'efface en pivotant vers l'arrière du dispositif et est maintenue effacée pendant que le tube 13b passe au-dessous de la plateforme 12f. Elle revient immédiatement à sa position initiale dès qu'elle dépasse la plateforme et sous l'effet du ressort 19, insère, en coopérant avec la languette-poussoir 13k, la motte mise en attente sur ladite plateforme. La motte est ainsi déplacée dans le sens de rotation R de la roue 13 tout en étant guidée par le guide-courbe 12h. Lorsque le tube se présente au-dessus du trou obtenu par la roue distributrice-perforatrice-imprimante 13, la palette 13c pivote sous l'effet de la rencontre du levier 13f et de la deuxième butée 21 située à l'arrière de la plateforme 12f et la motte ainsi libérée, passe dans le tube 13b et est déposée par celui-ci dans le trou de plantation.

Les trous de plantation sont obtenus par la roue distributrice-perforatrice-imprimante 13, laquelle comporte des plantoirs 14 fixés à l'extrémité des tubes distributeurs 13b. La roue 13 comporte ainsi autant de plantoirs 14 qu'elle possède de tubes 13b (figure 2).

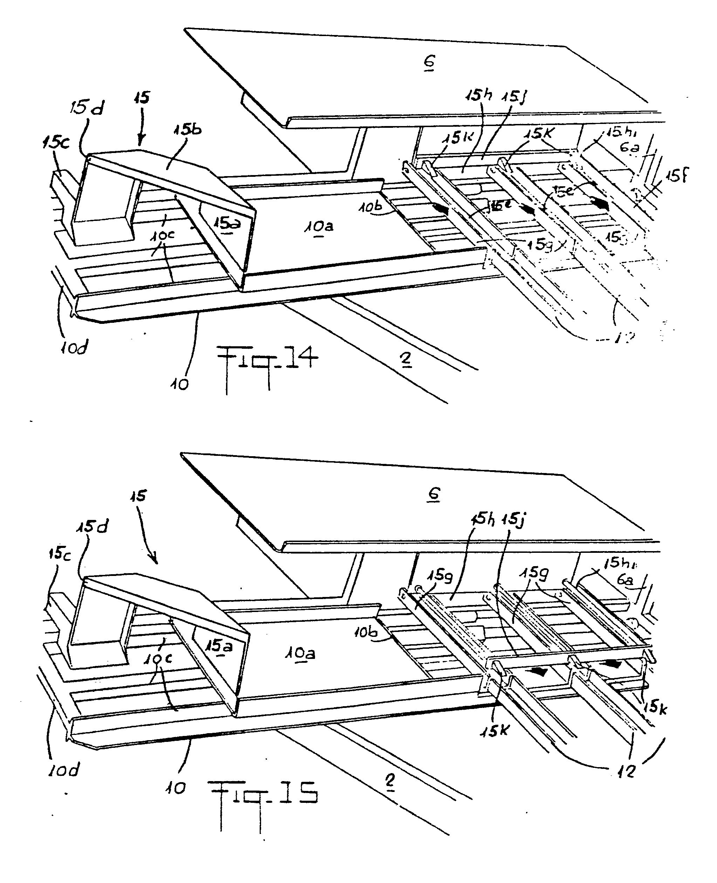

Un tube distributeur 13b associé à un plantoir 14 est illustré à la figure 8 du dessin.

Chaque plantoir 14 se compose de deux lames fixes 14a parallèles entre elles et qui prolongent les parois 13j/13e des tubes 13b. Ces lames 14a sont d'une largeur égale à celle desdites parois 13j/13e et s'étendent au-delà de l'extrémité d'un patin 28, dont il sera question plus loin, d'une distance égale à la profondeur du trou à obtenir. Leur bord 14b est biseauté et adopte une ligne brisée pour favoriser leur pénétration dans le sol et également dans du film en matière plastique utilisé pour le paillage des plants. Le profil d'extrémité des lames 14a forme ainsi un angle obtus dont l'angle au sommet 14c se situe sur l'axe médian des lames. Les lames 14a comportent ainsi deux angles 14d qui favorisent la pénétration du plantoir dans le film de plastique et également dans la terre.

Le plantoir 14 comporte encore deux lames mobiles 14e disposées en vis-à-vis et montées à pivotement autour de deux axes 27 parallèles entre eux pour se déplacer entre les deux lames fixes 14a.

Les deux axes 27 sont dans un même plan transversal et perpendiculaires au tube 13b. Chaque lame 14e est d'une largeur sensiblement inférieure à la distance qui sépare les deux lames fixes 14a et est biseautée le long de son bord inférieur 14f (figures 10/11).

Elle comporte le long de son bord supérieur un renflement cylindrique 14g comportant un alésage en son centre et dans lequel alésage est passé l'axe 27.

Le tube 13b comporte à sa partie inférieure deux supports 13m fixés aux parois 13e/13j, lesquels supports s'étendent perpendiculairement à celles-ci et forment de part et d'autre et à l'extrémité du tube 13b, des oreilles 13n dans lesquelles sont montées à pivotement, lesdites lames mobiles 14e.

La partie cylindrique 14g des lames 14e est prolongée à l'extérieur d'une des oreilles 13n, lequel prolongement 14h est cylindrique et est relié à la partie 14g par un pont de matière 14j.

Tel que cela est clairement représenté sur la figure 8, chaque lame mobile 14e comporte un prolongement 14h, lesquels sont situés du même côté du tube 13b.

Le pivotement de chacune des lames 14e est commandé par un levier 14k fixé au prolongement 14h et s'étendant radialement à celui-ci. Les leviers 14k sont coudés à angle droit à leur extrémité libre et coopèrent avec la tête 30a d'un coulisseau 30 monté à coulissement dans un support 13p adoptant la forme d'un U et fixé à la paroi 13e du tube 13b.

Les leviers 14k et le coulisseau 30 se déplacent dans un même plan. La tête 30a du coulisseau est d'une forme générale parallélépipédique et comporte à chacune de ses extrémités une échancrure rectangulaire dont le fond est arrondi et dans lesquelles se déplacent les parties coudées des leviers 14K. Le corps du coulisseau est cylindrique et est passé dans des trous 13q réservés dans le support en U 13p.

Le coulisseau 30 comporte à sa partie destinée à se déplacer entre les parois 13r du support 13p deux tétons 30b s'étendant diamétralement et coopérant avec une fourchette 31a et fixée à une des extrémités d'un levier 31 articulé autour d'un axe 32 monté sur la paroi 13f du support en U 13p. Le levier 31 comporte à son autre extrémité un galet 33 monté à rotation libre et dans un plan transversal audit levier. Ce galet 33 est de préférence un roulement à billes ou à rouleaux.

Un ressort 34 inséré entre les tétons 30b et la paroi inférieure 13r du support 13p et disposé autour du corps du coulisseau 30, tend à mettre en appui la tête 30a du coulisseau sur le support en U 13p.

La disposition des leviers est telle, à l'origine, que lorsque la tête 30a est en appui sur ledit support 13p, les lames mobiles 14e se rejoignent par leur bord inférieur biseauté telle que cela est illustré à la figure 10.

L'ouverture des lames mobiles 14e est provoqué par le pivotement dans le sens de la flèche F du levier 31. Les lames en position ouverte maximum sont représentées à la figure 11.

Lesdits patins 28 sont fixés aux tubes distributeurs 13b.

Chaque patin 28 est généralement rectangulaire, est évidé en son centre et est fixé, par exemple au moyen de boulons 29, audit support 13m solidaire des tubes 13b. Il se compose d'une paroi transversale courbe 28a, d'un rayon concentrique à celui du disque 13a et destiné à venir au contact du sol. Les éléments constitutifs 14a/14e du plantoir 14, s'étendent à partir de la face inférieure de la paroi 28a qui vient au contact du sol. Les bords latéraux du patin 28 forment deux parois parallèles entre elles 28b, lesquelles enveloppent en partie les organes autour desquels sont articulées les lames mobiles 14e.

A ses extrémités avant et arrière, la paroi 28a adopte une courbure 28c plus prononcée qui accompagne la courbure de la paroi 28a pour aboutir au niveau des bords supérieurs des parois latérales 28b.

La paroi 28a du patin 28 comporte, du côté du débattement des lames mobiles 14e, des échancrures 28d réservant un espace E entre les lames 14a/14e (figures 10/11).

L'ouverture des lames mobiles 14e est commandée par le levier 31 sous l'effet d'un vérin pneumatique à double effet 35 (figures 3 et 9).

Ce vérin 35 est fixé au châssis de la machine et est disposé derrière le disque 13 de la roue distributrice-perforatrice-imprimante. Le disque 13 comporte des lumières rectangulaires à bords arrondis 13u disposées suivant des rayons et à travers lesquelles s'étendent les leviers articulés 31 qui commandent les lames 14e.

Le vérin 35 est disposé dans une position sensiblement verticale et dans un plan passant par l'axe de rotation de la roue 13.

Sa tige mobile comporte une pièce 35a en forme de U dont l'aile 35b forme une came devant laquelle se déplace le galet 33, lors de la rotation de la roue 13. L'aile inférieure 35b de la pièce 35a forme une came pentée sur laquelle peut rouler le galet 33. Sur la figure 9, on a représenté en traits mixtes le galet 33 et la pièce 35a dans une position où les lames 14e sont fermées et se rejoignent, et en trait plein, lorsque les lames 14e sont ouvertes. La course du vérin d permet de réaliser l'ouverture et la fermeture des lames 14e. En fin de course haute, la came 35b s'immobilise devant une rampe pentée 36, laquelle prolonge la came 35b. Cette rampe 36 est solidaire d'un support 37 fixé au châssis de la machine.

La commande du vérin 35 est obtenue au moyen d'un palpeur fixé au châssis (non représenté) et coopérant avec une came 13w réservée sur une face du tube distributeur 13b (figure 8).

La tige du vérin 35 est initialement « sortie » et la came 35b est ainsi dans la position illustrée en traits mixtes sur la figure 9. Lorsqu'un tube distributeur 13b se présente à la partie extrême inférieure de la roue 13, soit dans une position sensiblement verticale, le plantoir 14 pénètre dans le sol, les lames 14a et 14e entaillent la bande de matière plastique et la terre. A ce moment l'entaille réalisée est illustrée à la figure 10 du dessin.

Simultanément, le palpeur, rencontrant la came 13w, commande le déplacement vers le haut de la tige du vérin 35, laquelle, sous l'effet de la came 35b et du galet 33, provoque le pivotement du levier 31 qui actionne l'ouverture des lames 14e. Le trou de plantation est alors formé (figure 11). La terre refoulée par les lames 14e forme des bourrelets 38 s'étendant dans lesdits espaces E réservés de part et d'autre desdites lames mobiles. Les mottes guidées par les tubes 13b tombent dans le trou ainsi formé. Les lames 14e sont maintenues ouvertes le temps nécessaire pour que la motte ne soit pas « reprise » par les lames 14e qui pourraient se refermer sur la plante.

Le maintien en position ouverte desdites lames est obtenu au moyen de la rampe 36 sur laquelle roule sur toute sa longueur le galet 33.

Lorsque le galet 33 arrive à l'extrémité 36 de la rampe, et qu'il échappe à la tenue par celle-ci, le levier 31 revient, sous l'effet du ressort 34 à sa position première et les lames sont de nouveau en position fermée, leurs bords inférieurs se rejoignant.

Le cycle se poursuit lorsqu'un nouveau tube 13b se présente à la partie extrême inférieure de la roue.

L'entraînement de la roue distributrice-perforatrice-imprimante 13 ainsi que l'entraînement de la bande transporteuse 12 b sont obtenus par un jeu de transmission par chaînes et pignons assurant un parfait synchronisme en fonction de la vitesse d'avancement de la machine. La mise en rotation des organes précités est provoquée par la rotation des roues porteuses 3.

Bien entendu, ces divers organes pourraient être entraînés par tout autre moyen moteur.

Comme l'illustre le dessin à sa figure 1, le dispositif selon l'invention peut être équipé d'un appareil dérouleur de bande plastique en vue de procéder simultanément au paillage et à la plantation des plants en mottes.

Selon ce mode de réalisation, le dispositif comporte au-dessous du châssis 2 et en avant des roues distributrices-perforatrices-imprimantes 13, un tambour 22 monté à rotation libre sur un axe porté par des supports 23, fixés audit châssis 2.

Ledit tambour 22 s'étend transversalement au châssis 2 et sensiblement sur toute sa largeur.

Sur ledit tambour est enroulée une bande de matière plastique souple encore appelée « film plastique » 24. En arrière du tambour 22 et en avant des roues 3, le châssis 2 porte des roues 25 de plus petite dimension que les roues 3 et qui se trouvent sur le chemin des bords latéraux de la bande 24. Ces roues 25 sont reliées au châssis 2 au moyen de supports 26.

La bande est déroulée jusqu'à ce que les roues 25 appliquent ses bords sur le sol. Le déroulement de la bande se produit sous l'effet de l'avancement de la machine.

Derrière les roues 25 sont fixés des corps de charrue disposés en dehors de la bande et qui recouvrent de terre les bords de celle-ci effectuant ainsi le buttage de la bande.

Au cours de son déroulement, la bande 24 passe au-dessous des roues distributrices-perforatrices-imprimantes 13, lesquelles font simultanément des perforations dans la bande et des impressions dans le sol dans lesquelles elles déposent les mottes.

Les roues 13 sont mises au contact du sol au moyen des vérins à vis 5 qui permettent de faire varier la distance au sol du châssis 2.

Le fonctionnement du dispositif selon l'invention décrit ci-avant est le suivant :

Les plateaux 7 comportant les mottes 8 initialement portées par le support 6, sont disposés un à un sur la structure 10. Le volet-poussoir 15a qui était relevé est rabattu dans le plateau et est mis au contact de la dernière rangée de mottes 8.

On met en fonction le circuit pneumatique. Le volet 15a, entraîné par son vérin, se déplace d'une valeur de trois mottes, du côté des couteaux 15g, et les trois premières rangées de mottes liées ensemble sont mises sur les supports mobiles 15e. Les couteaux 15g sont actionnés en passant entre les rangées de mottes en provoquant leur séparation. Les lames 15g et les supports 15e sont alors entraînés en translation par la monture téléscopique 15h sous l'effet du vérin qui la commande jusqu'à ce que les supports 15e, qui portent les rangées de mottes, se présentent devant les couloirs de transfert 12. Les rangées de mottes sont ensuite poussées dans les couloirs 12 par les poussoirs articulés 15k.

Dès que les rangées de mottes sont prises en charge par les bandes transporteuses 12b, les poussoirs 15k reviennent à leur position première et s'escamottent en pivotant de bas en haut pour laisser le passage des couteaux 15g, lesquels sont ramenés du côté de la plaque-support de mottes 10a en même temps que les supports mobiles 15e. Les couteaux sont ensuite rétractés et le volet-poussoir 15a se déplace de nouveau du côté des couteaux 15g pour transférer trois nouvelles rangées de mottes et le cycle se poursuit.

Les rangées de mottes prises en charge par les couloirs 12 sont amenées à la partie inférieure de celui-ci par les bandes transporteuses 12b et sont mises en butées sur la paroi 12k qui compose la partie 12d du couloir 12.

Les mottes qui se présentent devant la partie 12d des couloirs sont séparées de la rangée de mottes et sont simultanément poussées du côté des roues distributrices-perforatrices-imprimantes 13 pour être mises en attente de leur préhension sur la plateforme 12f. Elles sont ensuite prises par les languettes 13k qui coopèrent avec les volets pivotants 13c et sont enfin déposées par les tubes 13b dans les trous de plantation obtenus par les roues distributrices-perforatrices-imprimantes 13.

Afin de favoriser et de régulariser le passage des mottes 8 dans les tubes 13b, on insuffle de l'air au droit de l'ouverture supérieure desdits tubes. Cet air a également pour effet de pallier le freinage des plants dû au frottement éventuel des feuilles contre les parois du tube. Une quantité d'air est ainsi délivrée lors de chaque passage d'une motte 8 dans les tubes 13b.

Le dispositif comporte ainsi un tube distributeur d'air 39, lequel est fixé à la paroi « arrière » de la partie coudée 12d des couloirs 12. Les tubes 39 sont reliés au circuit d'air comprimé de la machine. La délivrance de la quantité d'air soufflé est obtenue par exemple au moyen d'une vanne pneumatique 40 dont l'ouverture est commandée par un palpeur (non représenté) qui coopère avec la came 13w. L'extrémité du tube 39 à partir de laquelle s'échappe l'air débouche au niveau de l'ouverture supérieure du tube 13b. L'extrémité du tube est légèrement inclinée, de telle sorte que l'air soit dirigé dans l'axe de la paroi du tube 13b qui comporte la came 13w et vers la partie interne du tube.

Comme cela est illustré sur la figure 3 du dessin, le tube 39 est contre-coudé pour que son extrémité 39a se situe dans l'axe du tube 13b et dans une position légèrement oblique dans la direction de la partie interne dudit tube et dans laquelle passent les mottes.

### Revendications

1. Dispositif pour planter des plants en mottes ou en godets comportant un châssis (2) porté par au moins deux roues (3) et comportant au moins une unité de plantation (11) comprenant une roue distributrice-perforatrice-imprimante (13) comportant des moyens distributeurs de mottes et des plantoirs (14) régulièrement répartis à sa périphérie, laquelle roue (13) est montée à rotation sur le châssis (2) pour se présenter dans une position sensiblement perpendiculaire au sol de manière à imprimer dans celui-ci des trous suivant un pas régulier, pour y disposer les mottes ou les godets (8), caractérisé en ce qu'il se compose :

— d'un couloir (12) incliné vers le bas et de l'avant vers l'arrière du châssis (2) pour acheminer les mottes (8) de la partie supérieure jusqu'à proximité du sol, lequel couloir (12) est disposé sur un des côtés de ladite roue distributrice-perforatrice-imprimante (13) et comporte des moyens pour déplacer dans le sens transversal, les mottes (8) parvenues à son extrémité arrière inférieure, de cette extrémité vers la roue distributrice-perforatrice-imprimante (13), lesquels moyens fonctionnent en synchronisme avec cette dernière pour que chaque motte soit poussée vers ladite roue (13) lors de chaque passage desdits moyens distributeurs de mottes et des plantoirs (14) ;

— de moyens pour alimenter ledit couloir (12) ;

— et en ce que la roue distributrice-perforatrice-imprimante (13) comporte des tubes distributeurs radiaux (13b) fixés sur la face de la roue (13) située du côté du couloir incliné (12), les tubes distributeurs radiaux (13b) étant disposés coaxialement au-dessus des plantoirs (14), laquelle roue (13) comporte en outre, à l'extrémité des tubes (13b), situées du côté du centre de la roue et près de la paroi arrière (13j) des tubes (13b), des languettes-poussoirs (13k) pour entraîner les mottes (8) provenant du couloir (12) et les faire tomber par gravité à travers les tubes (13b) correspondants pour les déposer dans les trous imprimés par la roue (13) au moyen des plantoirs (14).

2. Dispositif selon la revendication 1, caractérisé en ce que ledit couloir (12) est coudé à sa partie inférieure (12d) et s'étend du côté de la roue distributrice-perforatrice-imprimante (13) et comporte un poussoir (16) animé en translation par un vérin à double effet (17) se déplaçant dans sa partie s'étendant vers ladite roue (13) pour provoquer le déplacement des mottes (8) et les mettre en attente sur une plateforme (12f) solidaire du couloir (12) et située à proximité de la roue distributrice-perforatrice-imprimante (13) en vue de leur préhension par celle-ci et en ce que la plateforme (12f) prolongeant la partie coudée (12d) du couloir incliné (12) est dans un plan sensiblement horizontal et comporte un bord relevé (12g) situé à proximité de la face de la roue (13) qui comporte les tubes distributeurs (13b), lequel bord (12g) se prolonge au-delà de la plateforme (12f) et vers l'arrière du dispositif, parallèlement à la roue (13) et constitue un guide latéral (12h) pour guider les mottes (8) pendant le laps de temps où elles sont déplacées en étant insérées entre les languettes (13k) et les palettes pivotantes (13c) et pour les mettre exactement au droit de l'ouverture supérieure des tubes (13b) et pour les laisser tomber dans lesdits tubes.

3. Dispositif selon l'une quelconque des revendications 1 et 2, caractérisé en ce que les languettes-poussoirs (13k) sont disposées de telle sorte que chaque languette se trouve dans le prolongement de la paroi (13j) d'un tube et dans un plan perpendiculaire à celle-ci, lesquelles languettes (13k) se déplacent au cours de la rotation de la roue (13) au-dessus de la plateforme (12f), portée par le couloir (12), et en ce qu'en face de chaque languette 13k est disposée une palette (13c) articulée autour d'un axe (13d) perpendiculaire à la roue (13) et comportant un levier (13f) venant au contact d'une butée (20), située en avant du couloir (12) par rapport au sens de rotation de la roue (13), pour provoquer l'effacement de la palette (13c) lors du passage du tube (13b) au-dessous de la plateforme (12f) et un ressort (19) enroulé autour de l'axe (13d) pour la ramener dans une position sensiblement parallèle à la languette-poussoir (13k) afin d'insérer la motte en vue de sa préhension, l'ouverture de la palette (13c) par rapport à la languette (13k) pour libérer la motte (8) et la faire passer dans le tube (13b), étant provoquée par la rencontre du levier (13f) et d'une autre butée (21) située en arrière du couloir (12) par rapport au sens de rotation de la roue (13).

4. Dispositif selon les revendications 1 et 2, caractérisé en ce que la tige mobile du vérin (17), qui provoque le déplacement des mottes (8) du côté de la roue distributrice-perforatrice-imprimante (13), porte un organe poussoir (16) doté d'une arête vive (16c) se déplaçant dans un plan perpendiculaire au fond du couloir (12), jouxtant l'extrémité inférieure de la partie inclinée du couloir (12) pour détacher par cisaillement chaque motte (8) d'une rangée de mottes et d'une face plane (16d) pour pousser les mottes (8) dans la partie du couloir (12d) qui s'étend vers la roue distributrice-perforatrice-imprimante (13) et pour les mettre en attente sur la plateforme (12f).

5. Dispositif selon la revendication 1, caractérisé en ce que les moyens pour faire les trous de plantation dans le sol sont portés par la roue distributrice-perforatrice-imprimante (13) et consistent en des lames fixes et articulées deux à deux (14a/14e), prolongeant les tubes distributeurs (13b) à l'extérieur de la roue (13) sur une distance égale à la profondeur des trous à obtenir, lesquelles lames fixes (14a) et articulées (14e) délimitent le contour des trous de plantation.

6. Dispositif selon la revendication 5, caractérisé en ce que chaque tube distributeur (13b) comporte deux lames fixes (14a) parallèles entre elles et prolongeant deux de ses parois (13j/13e) et deux lames mobiles (14e) articulées à la partie inférieure des deux autres parois du tube, perpendiculaires à celles (13j/13e) qui comportent les lames fixes (14a), lesquelles lames mobiles (14e) sont reliées à des moyens pour les faire pivoter, de la partie médiane du tube vers les bords externes des lames fixes (14a) pour les immobiliser momentanément sensiblement dans le prolongement des parois du tube (13b) auxquelles elles sont articulées.

7. Dispositif selon la revendication 6, caractérisé en ce que chaque lame mobile (14e) comporte un levier (14k) qui coopère avec un coulisseau (30a) commun aux deux lames mobiles (14e), lequel est commandé par un bras (31) articulé à la roue distributrice-perforatrice-imprimante (13) s'étendant du côté de celle-ci et comportant à son extrémité libre un galet (33) pour rouler sur une came (35b), portée par le châssis (2).

8. Dispositif selon la revendication 7, caractérisé en ce que la partie de la came (35b), qui vient au contact du galet (33), est inclinée de bas en haut dans le sens de l'avancement du dispositif.

9. Dispositif selon l'une quelconque des revendications 7 et 8, caractérisé en ce que ladite came (35b) est montée sur la tige mobile d'un vérin à double effet (35) fixé au châssis (2) pour être déplacée dans une direction sensiblement verticale.

10. Dispositif selon la revendication 9, caractérisé en ce que la partie de la came (35b), qui est inclinée, se présente, en position extrême haute, dans le prolongement d'une rampe fixe (36) solidaire du châssis (2) et sur laquelle rampe fixe (36) roule ledit galet (33) dans le but de maintenir les lames mobiles (14e) totalement ouvertes pendant la chute des mottes (8) et jusqu'à ce qu'elles soient déposées dans les trous de plantation.

11. Dispositif selon l'une quelconque des revendications 1 à 10, caractérisé en ce que chaque tube distributeur (13b) comporte du côté de son ouverture de sortie et avant les lames fixes (14a) et mobiles (14e), un patin (28) débordant de part et d'autre du tube et dont la face (28a) qui vient au contact du sol est d'une courbure concentrique à la roue distributrice (13).

12. Dispositif selon la revendication 11, caractérisé en ce que le patin (28) comporte à proximité des axes d'articulation des lames mobiles (14e), des ouvertures de forme allongée (28d) s'étendant au moins sur la largeur desdites lames (14e) dans lesquelles ouvertures (28d) est refoulée la terre déplacée par lesdites lames mobiles (14e) pendant la formation des trous de plantation.

13. Dispositif selon l'une quelconque des revendications 1 à 12, lequel comporte devant la roue distributrice-perforatrice-imprimante (13) et au-dessous du châssis (2), un tambour transversal (22) autour duquel est enroulée une bande de matière plastique (24) dont les bords latéraux sont appliqués sur le sol au moyen de deux roues (25) disposées de part et d'autre de l'axe longitudinal du châssis, lesquels bords sont enterrés au moyen de corps charrue fixés au châssis (2) de manière à longer les bords latéraux de la bande (24), laquelle se déroule sous l'effet du déplacement du dispositif, caractérisé en ce que la bande (24) est perforée par les lames fixes (14a) et mobiles (14e) simultanément à la formation des trous, en vue d'obtenir en une seule opération la mise en terre et le paillage des plants.

14. Dispositif selon la revendication 13, caractérisé en ce que les bc : des lames fixes (14a) et mobiles (14e) qui sont . is au contact de la bande (24) sont affûtés en biseau et en ce que le bord de chacune des lames fixes (14a) qui est mise au contact de la bande (24) est délimité par deux lignes convergeant du côté du tube distributeur (13b) et se rejoignant au milieu de la lame en (14c) pour favoriser la pénétration de la lame dans la bande de matière plastique (24) et dans le sol.

15. Dispositif selon l'une quelconque des revendications 1 à 14, caractérisé en ce que les moyens pour alimenter ledit couloir sont portés par une structure métallique inclinée (10) fixée au châssis (2) et disposée dans le prolongement de l'extrémité supérieure du couloir 12, laquelle structure s'étend transversalement à celui-ci et sur la largeur du châssis 2 et comporte à l'une de ses extrémités et sur le côté du couloir 12, une table-support de mottes ou de godets (10a), lesquels moyens se composent :

— d'un volet-poussoir (15a) articulé à un support coulissant (15b) sur une glissière fixée à ladite structure (10) pour être déplacée transversalement vers le couloir (12), lequel volet (15a) est monté pivotant pour être éloigné de la table-support (10a) en vue de son chargement, ou rapproché de celle-ci et être mis au contact d'une rangée de mottes (8) en vue de leur transfert du côté du couloir (12) ;

— d'au moins un couteau séparateur de mottes (15g), lequel est disposé à proximité de la table-support (10a) et est animé d'un mouvement alternatif parallèlement au couloir (12) pour séparer de l'ensemble des mottes, une rangée de mottes et la mettre sur une plaque-support (15e) associée au couteau (15g) ;

— des moyens pour provoquer le déplacement transversal du couteau (15g) et de ladite plaque-support (15e) qui porte les mottes (8) et pour les disposer devant le couloir incliné (12) et dans le prolongement de celui-ci ;

— des moyens pour actionner un poussoir (14k) animé d'un mouvement alternatif et se déplaçant dans l'axe du couloir (12) pour pousser les mottes (8) dans le couloir (12) ;

— et des moyens pour ramener le couteau (15g) et la plaque support (15e) à proximité de la table-support de mottes (10a).

16. Dispositif selon l'une quelconque des revendications 1 à 15, caractérisé en ce qu'il comporte au niveau de la plateforme (12f), sur le côté de celle-ci et vers l'arrière, un tube distributeur d'air (39) dirigé vers l'intérieur des tubes (13b) et dont l'extrémité (39a) débouche à proximité de l'ouverture supérieure desdits tubes, la quantité d'air insufflé étant délivrée au moyen d'une vanne télécommandée (40) dont l'ouverture se produit chaque fois qu'un tube 13b se présente devant ladite partie (39a) du tube distributeur d'air.

## Claims

1. Device for ball or cup planting comprising a chassis (2) carried by at least two wheels (3) and comprising at least one planting unit (11) consisting of a dispensing-perforating-stamping wheel (13) comprising ball-distributing means and dibbles (14) distributed regularly on its periphery, which wheel (13) is mounted for rotation on the chassis (2) to arrive on the ground in a substantially perpendicular position in order to imprint holes therein according to a regular pitch, for placing the balls or cups therein (8) characterized in that it is composed :

— of a passage (12) downwardly inclined from the front to the back of the chassis (2) to convey the balls (8) from the upper part to close to the ground, which passage (12) is arranged on one of the sides of the said distributing-perforating-stamping wheel (13) and comprises means for moving in the transverse direction, the balls (8) which have reached its lower rear end, from that end towards the distributing-perforating-stamping wheel (13), the said means working synchronously with said latter so that each ball is pushed towards the said wheel (13) at each passage of the said ball and cup-distributing means (14) ;

— means for supplying the said passage (12) ;

— and in that the distributing-perforating-stamping wheel (13) comprises radial distributing tubes (13b) fixed on the face of the wheel (13) which is situated on the side of the inclined passage (12) which wheel (13) further comprises, at the end of the tubes (13b), situated on the side of the centre of the wheel, push-tongues (13k) for driving the balls (8) coming from the passage (12), and opposite each of said tongues (13k) a pushplate (13c) hingedly mounted on the wheel (13) to take each ball coming out of the passage (12) with the tongue (13k) to hold it and release it so that it falls by gravity and through a tube (13b) to be deposited in one of the holes made by the wheel (13) by means of the dibbles (14).

2. Device according to claim 1, characterized in that the said passage (12) is bent at its lower part (12d) and extends on the side of the distributing-perforating-stamping wheel (13) and comprises a push member (16) which is moved in translation by a double-acting jack (17) moving in its part which extends towards the said wheel (13) to cause the displacement of the balls (8) and place them temporarily on a platform (12f) integral with the passage (12) and situated near the distributing-perforating-stamping wheel (13) in order to be gripped by the latter and in that the platform (12f) which extends from the bent part (12d) of the inclined passage (12) is in a substantially horizontal plane and comprises a raised edge (12g) situated near the face of the wheel (13) which comprises the distributing tubes (13b), which edge (12k) extends beyond the platform (12f) and towards the back of the device, in parallel to the wheel (13) and constitutes a side guide (12h) for guiding the balls (8) during the space of time in which they are moved by being inserted between the tongues (13k) and the pivoting push-plates (13c) and to place them exactly at right angles with the upper opening of the tubes (13b) and drop them into the said tubes.

3. Device according to any one of claims 1 and 2, characterized in that the push-tongues (13k) are disposed in such a way that each tongue extends from the wall (13j) of a tube and inside a plane perpendicular thereto ; the said tongues (13k) move during the rotation of the wheel (13) above the platform (12f) carried by the passage (12) and each push-plate (13c) is mounted for pivoting about an axis (13d) perpendicular to the wheel (13) and comprises a lever (13f) which comes into contact with an abutment (20), situated at the front of the passage (12) with respect to the direction of rotation of the wheel (13), to cause the retraction thereof during the passage of the tube (13b) above the platform (12f) and a spring (19) wound around the axis (13d) to return it in a position substantially parallel to the push-tongue (13k) in order to insert the ball with a view to its being gripped, the opening of the push-plate (13c) with respect to the tongue (13k) to release the ball (8) and make it pass into the tube (13b), being caused by the lever (13f) coming into contact with another abutment (21) situated at the back of the passage (12) with respect to the direction of rotation of the wheel (13).

4. Device according to claims 1 and 2, characterized in that the movable rod of the jack (17) which causes the balls (8) to move on the side of the distributing-perforating-stamping wheel (13), carries a push-member (16) having a sharp edge (16c) which moves within a plane perpendicular to the bottom of the passage (12) adjacent the lower end of the inclined portion of the passage (12) to detach each ball (8) by shearing from a row of balls and a plane face (16d) for pushing the balls (8) into the part of the passage (12d) which extends towards the distributing-perforating-stamping wheel (13) and for placing them temporarily on the platform (12f).

5. Device according to claim 1, characterized in that the means for making planting holes in the ground are carried by the distributing-perforating-stamping wheel (13) and consist in fixed blades hingedly connected in pairs (14a/14e) extending from the distributing tubes (13b) outside said wheel (13) over a distance equal to the depth required for the holes, which fixed blades (14a) hinged together (14e) define the outline of the planting holes.

6. Device according to claim 5, characterized in that each distributing tube (13b) comprises two fixed blades (14a) parallel together and extending from two of its walls (13j/13e) and two movable blades (14e) hingedly mounted on the lower end of the two other walls of the tube, perpendicular to those (13j/13e) comprising the fixed blades (14a), which movable blades (14e) are joined to means causing their pivoting movement from the median part of the tube towards the outer edges of the fixed blades (14a) to immobilize them temporarily substantially in extension of the walls of the tube (13b) on which they are hingedly mounted.

7. Device according to claim 6, characterized in that each movable blade (14e) comprises a lever (14k) which cooperates with a slide-block (30a) which is common to the two movable blades (14e), which slideblock is controlled by an arm (31) hinged on the distributing-perforating-stamping wheel (13) extending on the side thereof and provided at its free end with a runner (33) to roll over a cam (35b) carried by the chassis (2).

8. Device according to claim 7, characterized in that the part of the cam (35b) which comes into contact with the runner (33) is inclined downwards from the top in the direction in which the device advances.

9. Device according to any one of claims 7 and 8, characterized in that the said cam (35b) is mounted on the movable rod of a double-acting jack (35) fixed on the chassis (2) so as to be moved in a substantially vertical direction.

10. Device according to claim 9, characterized in that the part of the cam (35b) which is inclined, presents itself, when in an extremely high position, as extending from a fixed ramp (36) integral with the chassis (2) and on which fixed ramp (36) rolls the said runner (33) for the purpose of holding the movable blades (14e) completely open whilst the balls (8) are dropped and until they are deposited in the planting holes.

11. Device according to any one of claims 1 to 10, characterized in that each distributing tube (13b) comprises on the side of its outlet and in front of the fixed blades (14a) and movable blades (14e), a sole piece (28) projecting on either side of the tube and of which the face (28a) which comes into contact with the ground is curved concentrically to the distributing wheel (13).

12. Device according to claim 11, characterized in that the sole piece (28) comprises close to the pivoting axes of the movable blades (14e), elongated openings (28d) extending at least over the width of the said blades (14e) into which openings (28d) is discharged the soil removed by the said movable blades (14e) during the formation of the planting holes.

13. Device according to any one of claims 1 to 12, comprising in front of the distributing-perforating-stamping wheel (13) and beneath the chassis (2), a transverse drum (22) around which is wound a strip of plastic material (24) of which the side edges are applied on the ground by way of two wheels (25) situated on either side of the longitudinal axis of the chassis, which edges are buried in by means of ploughing members secured to the chassis (2) so as to follow the side edges of said strip (24) which latter unrolls under the effect of the movement of the device, characterized in that the strip (24) is perforated by the fixed (14a) and movable (14e) blades simultaneously to the formation of the holes, in order to achieve in a single operation the planting and mulching of the seedlings.

14. Device according to claim 13, characterized in the edges of the fixed (14a) and of the movable (14e) blades which are placed in contact with the strip (24) are bevelled and in that the edge of each one of the fixed blades (14a) which is brought into contact with the strip (24) is defined by two lines converging on the side of the distributing tube (13b) and joining up in the middle of the blade in (14c) to help the blade to penetrate into the strip of plastic material (24) and into the ground.

15. Device according to any one of claims 1 to 14, characterized in that the means for supplying the passage are carried by an inclined metallic structure (10) secured to the chassis (2) and extending from the upper end of the passage (12), which structure extends crosswise to said passage and over the width of the chassis (2) and comprises at one of its ends and on the side of the passage (12) a supporting table (10a) for the balls or cups, which means comprise :

— a push-flap (15a) hinged to a support (15b) sliding on a slide secured to the said structure (10) to be moved crosswise towards the passage (12), which flap (15a) is pivotally mounted in order to be separated from the supporting table (10a) for subsequent loading, or brought closer thereto and be placed in contact with a row of balls (8) with a view to transferring same on the side of the passage (12) ;

— at least one ball-separating knife (15g), which is placed close to the supporting table (10a) and which is imparted with a reciprocal movement in parallel to the passage (12) in order to separate from the whole amount of balls, a row of balls and place it on a supporting-plate (15e) associated to the knife (15g) ;

— means for causing the transverse movement of the knife (15g) and of the said supporting plate (15e) which carries the balls (8) and to place them in front of the inclined passage (12) and in extension thereof ;

— means for actuating a push-member (14k) which moves to and fro along the axis of the passage (12) for pushing the balls (8) in the passage (12) ;

— and means for returning the knife (15g) and the supporting plate (15e) close to the ball supporting table (10a).

16. Device according to any one of claims 1 to 15, characterized in that it comprises at the level of the platform (12f), on the side thereof and towards the back, an air-distributing tube (39) directed inwardly of the tubes (13b) and of which the end (39a) issues close to the upper opening of the said tubes, the quantity of air blown in being delivered via a remote-controlled valve (40) which opens every time a tube 13b presents itself in front of the said part (39a) of the air-distributing tube.

### Ansprüche

1. Vorrichtung zum Einpflanzen von Pflanzen in Ballen oder Bechern, mit einem von wenigstens zwei Rädern (3) getragenen Rahmen (2) und mit wenigstens einer Pflanzeinheit (11) einschliesslich eines verteilenden, perforierenden und eindringenden Rads (13) mit einer Ballenverteilungseinrichtung und mit an seinem Umfang regelmässig verteilten Pflanzgeräten (14), wobei das Rad (13) am Rahmen (2) drehbar gelagert und zum Boden im wesentlichen senkrecht derart angeordnet ist, dass es in diesem Löcher mit regelmässiger Teilung eindrückt und dort die Ballen oder Becher (8) ablegt, gekennzeichnet durch eine von vorn nach hinten und nach unten geneigte Rutsche (12), die die Ballen (8) vom Oberteil bis in Nähe des Bodens zuführt, auf einer der Seiten des Rads (13) angeordnet ist und eine Einrichtung aufweist, die die von ihrem hinteren unteren Ende stammenden Ballen (8) von diesem Ende zum Rad (13) verschiebt, wobei die Einrichtung synchron mit dem Rad (13) arbeitet, damit jeder Ballen bei jedem Vorbeigang der Ballenverteilungseinrichtung und der Pflanzgeräte (14) zum Rad (13) gedrückt wird, und durch eine Einrichtung zum Versorgen der Rutsche (12), wobei das Rad (13) radiale Verteilerrohre (13b) aufweist, die auf der an der Seite der geneigten Rutsche (12) gelegenen Seitenfläche des Rads (13) befestigt sind, wobei das Rad (13) ausserdem aufweist : an dem auf der Seite der Mitte des Rads gelegenen Ende der Rohre (13b) Drückzungen (13k) zum Antreiben der von der Rutsche (12) stammenden Ballen und gegenüber jeder Zunge (13k) eine am Rad (13) angelenkte Platte (13c) zum zusammen mit der Zunge (13k) erfolgenden Ergreifen jedes Ballens am Austritt der Rutsche (12) zum Halten des Ballens und zum Freigeben des Ballens, damit er mittels Schwerkraft durch ein Rohr (13b) fällt zu seiner Ablage in einem der Löcher, die durch das Rad (13) mit Hilfe der Pflanzgeräte (14) eingedrückt werden.

2. Vorrichtung nach Anspruch 1, dadurch gekennzeichnet, dass die Rutsche (12) an ihrem Unterteil abgewinkelt ist, sich von der Seite des Rads (13) aus erstreckt und einen Drücker (16) aufweist, der durch einen doppelt wirkenden Stellzylinder (17) verschoben wird, der sich in seinem sich zum Rad (13) erstreckenden Teil verstellt, wobei er die Ballen (8) verschiebt und sie in Bereitschaftsstellung auf eine Plattform (12f) legt, die mit der Rutsche (12) verbunden ist und sich in Nähe des Rads (13) befindet, im Hinblick auf ein Ergreifen der Ballen durch das Rad, und dass die den abgewinkelten Teil (12d) der geneigten Rutsche (12) verlängernde Plattform (12f) sich in einer im wesentlichen waagerechten Ebene befindet und einen in Nähe der die Verteilerrohre (13b) enthaltenden Seitenfläche des Rads (13) gelegenen erhöhten Rand (12g) aufweist, der sich über die Plattform (12f) hinaus und zum Hinterteil der Vorrichtung parallel zum Rad (13) verlängert und eine seitliche Führung (12h) bildet zum Führen der Ballen (8) während des Zeitablaufs, in dem sie verschoben und dabei zwischen den Zugen (13k) und die schwenkbaren Platten (13c) eingesetzt werden, zum genauen Anbringen der Ballen an der oberen Öffnung der Rohre (13b) und zum Fallenlassen der Ballen in die Rohre.

3. Vorrichtung nach einem der Ansprüche 1 und 2, dadurch gekennzeichnet, dass die Drückzungen (13k) derart angeordnet sind, dass sich jede Zunge in der Verlängerung der Wand (13j) eines Rohrs und in einer zu dieser senkrechten Ebene befindet, wobei sich die Zungen (13k) während der Drehung des Rads (13) über die von der Rutsche (12) getragene Plattform (12f) verschieben und jede Platte (13c) an einer zum Rad (13) senkrechten Achse (13d) angelenkt ist und einen Hebel (13f) aufweist, der in Berührung mit einem Anschlag (20) kommt, der sich in der Drehrichtung des Rads (13) vor der Rutsche (12) befindet, wodurch eine Rückstellung der Platte (13c) während ihres Durchgangs unter der Plattform (12f) hervorgerufen wird, und eine Feder (19) aufweist, die um die Achse (13d) gewickelt ist, um die Platte in eine zur Drückzunge (13k) im wesentlichen parallele Lage zurückzuführen zum Einsetzen des Ballens im Hinblick auf dessen Ergreifen, wobei das Öffnen der Platte (13c) gegenüber der Zunge (13k) zur Freigabe des Ballens (8) und dessen Bewegung in das Rohr (13b) hervorgerufen werden durch die Begegnung des Hebels (13f) mit einem weiteren Anschlag (21), der in Drehrichtung des Rads (13) hinter der Rutsche (12) angeordnet ist.

4. Vorrichtung nach Anspruch 1 und 2, dadurch gekennzeichnet, dass die bewegliche Stange des Stellzylinders (17), die die Verschiebung der Ballen (8) auf der Seite des Rads (13) hervorruft, ein Drückorgan (16) trägt, das versehen ist : mit einer scharfen Kante (16c), die sich in einer zum Boden der Rutsche (12) senkrechten Ebene verschiebt, die sich an das untere Ende des geneigten Teils der Rutsche (12) anschliesst, zum durch Abschneiden erfolgenden Lösen jedes Ballens (8) von einer Reihe von Ballen, und mit einer ebenen Stirnfläche (16d) zum Drücken der Ballen (8) in den sich zum Rad erstreckenden Teil (12d) der Rutsche, um die Ballen in Bereitschaftsstellung auf die Plattform (12f) zu legen.

5. Vorrichtung nach Anspruch 1, dadurch gekennzeichnet, dass die die Pflanzlöcher im Boden herstellende Einrichtung vom Rad (13) getragen wird und aus feststehenden sowie paarweise angelenkten Klingen (14a ; 14e) besteht, die die Verteilerrohre (13b) zur Aussenseite des Rads (13) in einem Abstand verlängern, der gleich der Tiefe der herzustellenden Löcher ist, wobei die feststehenden (14a) und angelenkten (14e) Klingen die Kontur der Pflanzlöcher begrenzen.

6. Vorrichtung nach Anspruch 5, dadurch gekennzeichnet, dass jedes Verteilerrohr (13b) aufweist : zwei feststehende parallele Klingen (14a), die zwei seitliche Wände (13j ; 13e) verlängern, und zwei bewegliche Klingen (14e) die am Unterteil der beiden anderen Wände des Rohrs angelenkt sind, und zwar senkrecht zu den die feststehenden Klingen (14a) tragenden Wänden (13j ; 13e), wobei die beweglichen Klingen (14e) mit einer Einrichtung verbunden sind, die sie vom Mittelteil des Rohrs zu den äusseren Wänden der feststehenden Klingen (14a) dreht zu ihrer kurzzeitigen Festlegung im wesentlichen in der Verlängerung der Wand des Rohrs (13b), an dem sie angelenkt sind.

7. Vorrichtung nach Anspruch 6, dadurch gekennzeichnet, dass jede bewegliche Klinge (14e) einen Hebel (14k) aufweist, der mit einem den beiden beweglichen Klingen (14e) gemeinsamen Führungsschlitten zusammenarbeitet, der von einem am Rad (13) angelenkten Arm (31) gesteuert wird, der sich auf der Seite des Rads erstreckt und an seinem freien Ende eine Rolle (33) aufweist, die auf einem vom Rahmen (2) getragenen Nocken (35b) rollt.

8. Vorrichtung nach Anspruch 7, dadurch gekennzeichnet, dass der in Berührung mit der Rolle (31) kommende Teil des Nockens (35b) in der Vorschubrichtung der Vorrichtung von unten nach oben geneigt ist.

9. Vorrichtung nach einem der Ansprüche 7 und 8, dadurch gekennzeichnet, dass der Nocken (35b) auf der beweglichen Stange eines doppelt wirkenden Stellzylinders (35) angeordnet ist, der am Rahmen (2) befestigt ist und in einer im wesentlichen senkrechten Richtung verstellt wird.

10. Vorrichtung nach Anspruch 9, dadurch gekennzeichnet, dass der geneigte Teil des Nockens (35b) in extrem hoher Stellung sich in der Verlängerung einer feststehenden Rampe (36) befindet, die mit dem Rahmen (2) fest verbunden ist und auf der die Rolle (33) mit dem Ziel rollt, die beweglichen Klingen (14e) während des Herabfallens der Ballen (8) ganz offen zu halten, bis sie in den Pflanzlöchern abgelegt sind.

11. Vorrichtung nach einem der Ansprüche 1 bis 10, dadurch gekennzeichnet, dass jedes Verteilerrohr (13b) auf der Seite seiner Auslassöffnung und vor den feststehenden (14a) sowie beweglichen (14e) Klingen einen Schuh (28) aufweist, der beiderseits des Rohrs übersteht und dessen in Berührung mit dem Boden kommende Stirnfläche eine mit dem Rad (13) konzentrische Krümmung aufweist.

12. Vorrichtung nach Anspruch 11, dadurch gekennzeichnet, dass der Schuh (28) in Nähe der Anlenkachsen der beweglichen Klingen (14e) langgestreckte Öffnungen (28d) aufweist, die sich wenigstens über die Breite dieser Klingen (14e) erstrecken, wobei in diese Öffnungen (28d) die Erde gefördert wird, die während der Bildung der Pflanzlöcher durch die beweglichen Klingen (14e) verschoben wird.

13. Vorrichtung nach einem der Ansprüche 1 bis 12, mit einer vor dem Rad (13) und unter dem Rahmen (2) angeordneten querverlaufenden Trommel (22), um die ein Band (24) aus Kunststoff gewickelt ist, dessen seitliche Ränder durch zwei beiderseits der Längsachse des Rahmens angeordnete Räder (25) auf den Boden gedrückt werden, wobei diese Ränder durch Pflugkörper eingegraben werden, die derart am Rahmen (2) befestigt sind, dass sie die seitlichen Ränder des Bands (24) festlegen, das sich unter der Wirkung der Verschiebung der Vorrichtung abwickelt, dadurch gekennzeichnet, dass das Band (24) bei der Bildung der Löcher durch die feststehenden (14a) und beweglichen (14e) Klingen gleichzeitig perforiert wird zum Einsetzen der Pflanzen in die Erde und zum Abdecken der Pflanzen in einem einzigen Vorgang.

14. Vorrichtung nach Anspruch 13, dadurch gekennzeichnet, dass die Ränder der feststehenden (14a) und beweglichen (14e) Klingen, die in Berührung mit dem Band (24) gebracht werden, schräg geschärft sind, und dass der in Berührung mit dem Band (24) gebrachte Rand jeder der feststehenden Klingen (14a) durch zwei Linien begrenzt wird, die auf der Seite des Verteilerrohrs (13b) konvergieren und sich bei (14c) in der Mitte der Klinge vereinigen, um das Eindringen der Klinge in das Band (24) aus Kunststoff und in den Boden zu begünstigen.

15. Vorrichtung nach einem der Ansprüche 1 bis 14, dadurch gekennzeichnet, dass die Einrichtung zur Versorgung der Rutsche von einer metallischen geneigten Konstruktion (10) getragen wird, die am Rahmen (2) befestigt und in der Verlängerung des oberen Endes der Rutsche (12) angeordnet ist, wobei sich diese Konstruktion quer hierzu über die Breite des Rahmens (2) erstreckt und an einem ihrer Enden sowie auf der Seite der Rutsche (12) einen Tragtisch (10a) für Ballen oder Becher aufweist, wobei die Einrichtung aufweist :

— eine Drückklappe (15a), die an einen Träger (15b) angelenkt ist, der auf einer an der Konstruktion (10) befestigten Gleitbahn verschiebbar ist, um quer zur Rutsche (12) verschoben zu werden, wobei die Drückklappe (15a) schwenkbar gelagert ist, um vom Tragtisch (10a) entfernt zu werden im Hinblick auf dessen Beladung oder um ihm genähert und in Berührung mit einer Reihe von Ballen (8) gebracht zu werden im Hinblick auf deren Transport auf der Seite der Rutsche (12),

— wenigstens zwei Messer (15g) zum Abtrennen von Ballen, das sich in Nähe des Tragtischs (10a) befindet und parallel zur Rutsche (12) hin- und herbewegt wird, um von einer Anordnung von Ballen eine Ballenreihe abzutrennen und diese auf eine mit dem Messer (15g) verbundene Tragplatte (15e) zu legen,

— eine Einrichtung zur Querverschiebung der Messer (15g) und der die Ballen (8) tragenden Tragplatte (15e) und zur Anordnung der Ballen vor der geneigten Rutsche (12) und in deren Verlängerung,

— eine Einrichtung zur Betätigung eines hin- und hergehend bewegten Drückers (14k), der sich in der Achse der Rutsche (12) verschiebt und die Ballen (8) in die Rutsche (12) drückt, und

— eine Einrichtung zur Rückführung des Messers (15g) und der Tragplatte (15e) in Nähe des Tragtischs (10a) für die Ballen.

16. Vorrichtung nach einem der Ansprüche 1 bis 15, gekennzeichnet durch ein in Höhe der Plattform (12f) auf deren Seite und gegen das Hinterteil zu angeordnete Luftverteilerrohr (39), das zum Innenraum der Rohre (13b) gerichtet ist und dessen Ende (39a) in Nähe der oberen Öffnung dieser Rohre mündet, wobei die eingeblasene Luftmenge durch ein ferngesteuertes Ventil geliefert wird, dessen Öffnen jedes Mal dann erfolgt, wenn ein Rohr (13b) sich vor diesem Teil (39a) des Luftverteilerrohrs befindet.

Fig. 1

**0 016 892**

Fig. 3

Fig. 2

2

Fig. 4

Fig. 5

Fig. 6

Fig. 7

Fig 4

Fig. 9

35

37

35a

36a  36

33

35b

33

d

Fig.10

13b

14g    14g    28

28b    14e    28b

14e

14e

14e

E

14f

Fig.11

13b

14g    14g    28

28b    28b

38    38

14e    14a    14e

E

14f    14f

Fig.12

Fig.13

7

Fig.14

Fig.15